## Europäisches Patentamt

## European Patent Office

## Office européen des brevets

(19)

(11) Veröffentlichungsnummer: **0 259 591**
**B1**

(12)

# EUROPÄISCHE PATENTSCHRIFT

(45) Veröffentlichungstag der Patentschrift:
05.09.90

(51) Int. Cl.⁵: **B23K 11/30**

(21) Anmeldenummer: 87110827.0

(22) Anmeldetag: 25.07.87

(54) Buckelschweisswerkzeug.

(30) Priorität: 10.09.86 CH 3631/86

(43) Veröffentlichungstag der Anmeldung:
16.03.88 Patentblatt 88/11

(45) Bekanntmachung des Hinweises auf die Patenterteilung:
05.09.90 Patentblatt 90/36

(84) Benannte Vertragsstaaten:
CH DE ES FR GB GR IT LI NL SE

(56) Entgegenhaltungen:
DE-A- 3 111 494
US-A- 2 474 593

PATENT ABSTRACTS OF JAPAN, Band 6,
Nr. 236 (M-173)[1114], 25. November 1982; &
JP-A-57 137 081 (NISSAN JIDOSHA K.K.) 24-08-1982
PATENT ABSTRACTS OF JAPAN, Band 9,
Nr. 124 (M-383)[1847], 29. Mai 1985; &
JP-A-60 9589 (TAKAO KINZOKU KOGYO
K.K.) 18-01-1985

(73) Patentinhaber: ELPATRONIC AG, Baarerstrasse 117,
CH-6300 Zug(CH)

(72) Erfinder: Bischofberger, Walter, Rebhalde 431,
CH-8166 Niederweningen(CH)
Erfinder: Urech, Werner, Rheingasse 28,
CH-8434 Kaiserstuhl(CH)

(74) Vertreter: Hotz, Klaus, Dipl.-El.-Ing. / ETH, c/o
SOUDRONIC AG Industriestrasse 35 Postfach 11,
CH-8962 Bergdietikon(CH)

## Beschreibung

Die Erfindung betrifft ein Buckelschweisswerkzeug mit

– zwei Werkzeugteilen, die hubweise gegeneinander bewegbar sind,
– mindestens zwei Paar Elektroden, die einander gegenüberstehend je einem der Werkzeugteile zugeordnet sind,
– einer Kolbenzylindereinheit je Elektrodenpaar, mit jeweils einem Druckkolben, der mittels eines Arbeitsmediums die eine Elektrode des Paares in Richtung zur gegenüberstehenden Elektrode hin bewegbar am zugehörigen Werkzeugteil abstützt, und
– mindestens einem Kraftspeicher, der durch das Arbeitsmedium aufladbar ist.

Buckelschweisswerkzeuge dieser Gattung sind bekannt (DE-A 3 111 494 sowie Merkblatt DVS 2930 des Deutschen Verbandes für Schweisstechnik e.V. vom April 1983). Bei ihnen sorgt die hydraulische Abstützung einer Elektrode jedes Elektrodenpaars über einen Druckkolben dafür, dass die Elektroden an den Buckeln der miteinander zu verschweissenden Werkstücke gleichmässig anliegen und nahezu trägheitslos in dem Mass nachsetzen, wie die Buckel beim Schweissen einschmelzen.

Bei den bekannten gattungsgemässen Buckelschweisswerkzeugen sind die Druckkolben unmittelbar in Bohrungen des zugehörigen Werkzeugteils angeordnet. Wegen des ein für allemal festliegenden Durchmessers dieser Bohrungen liegt auch die Kraft fest, die bei gegebenem Druck des Arbeitsmediums bei jedem Arbeitshub des Werkzeugs auf die zugehörige Elektrode ausgeübt wird. Eine Anpassung dieser Kraft an unterschiedliche Schweissbedingungen ist allenfalls für alle Druckkolben gemeinsam durch Veränderung des ihnen zugeordneten Kraftspeichers möglich.

Der Erfindung liegt deshalb die Aufgabe zugrunde, ein Buckelschweisswerkzeug der eingangs beschriebenen Gattung derart weiterzubilden, dass auch bei unterschiedlichem Kraftbedarf an Schweissstellen bzw. Elektrodenpaaren die Elektrodenkraft leicht und individuell an die jeweiligen Schweissbedingungen angepasst werden kann.

Die Aufgabe ist erfindungsgemäss dadurch gelöst, dass mindestens zwei der auswechselbar am zugehörigen Werkzeugteil befestigten Kolbenzylindereinheiten Druckkolben unterschiedlicher Durchmesser enthalten, jedoch Zylinder mit Aussengewinde gleichen Durchmessers zum Einschrauben in Gewindebohrungen des zugehörigen Werkzeugteils aufweisen.

Aus der JP-A 57 137 081 ist es an sich bekannt, Kolbenzylindereinheiten auswechselbar auf der Grundplatte einer Schweissvorrichtung zu montieren.

Es ist vorteilhaft, wenn jeder Kolbenzylindereinheit ein gesondert am zugehörigen Werkzeugteil befestigter Führungskörper zugeordnet ist, in dem ein Stössel als Zwischenglied zwischen dem Druckkolben und der zugehörigen Elektrode geführt ist. Auf diese Weise lassen sich die Kolbenzylindereinheiten weitgehend oder vollständig von Querkräften entlasten, die beispielsweise beim Einlegen der zu verschweißenden Werkstücke auftreten können. Die Anordnung mehrerer Kolbenzylindereinheiten am zugehörigen Werkzeugteil braucht der Anordnung der Schweißbuckel nicht besonders genau zu entsprechen, da sich Ungenauigkeiten durch entsprechende Anordnung der Führungskörper und zugehörigen Stößel ausgleichen lassen.

In manchen Fällen ist es zweckmäßig, wenn mindestens zwei Elektrodenanordnungen, die mindestens je ein Elektrodenpaar aufweisen, je ein eigener Kraftspeicher zugeordnet ist, der unabhängig von jedem anderen Kraftspeicher aufladbar ist. Durch mehr oder weniger starke, beispielsweise mechanische oder pneumatische Vorspannung der verschiedenen Kraftspeicher erhalten die zugehörigen Druckkolben Kraft-Wegcharakteristiken, die unterschiedlichen Bedürfnissen an verschiedenen Schweißstellen genau angepaßt werden können.

Ein Ausführungsbeispiel der Erfindung wird im folgenden anhand schematischer Zeichnungen mit weiteren Einzelheiten erläutert. Es zeigt:

Fig. 1 eine teilweise als senkrechter Schnitt gezeichnete Vorderansicht eines erfindungsgemäßen Buckelschweißwerkzeugs,

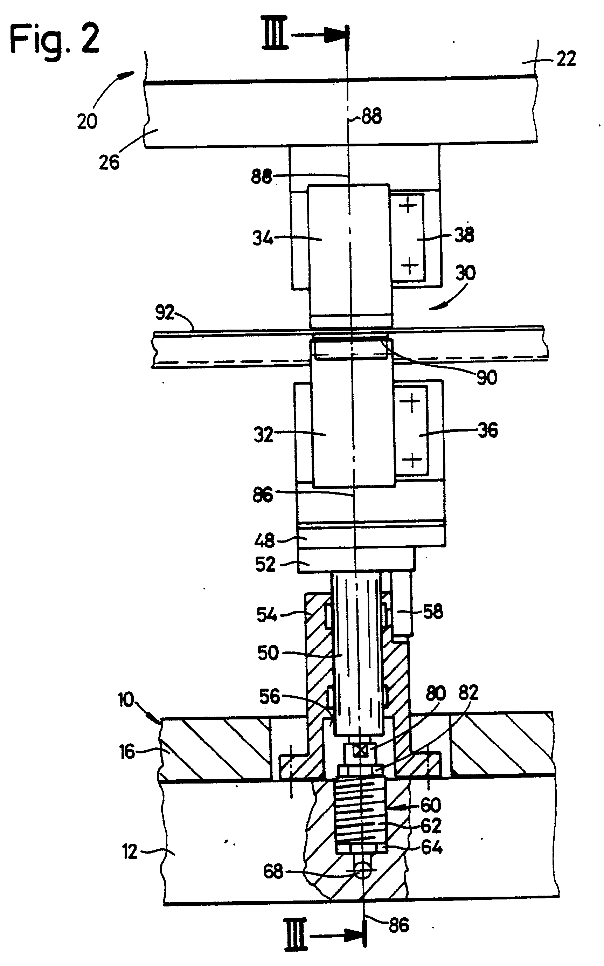

Fig. 2 einen vergrößerten Ausschnitt aus Fig. 1 und

Fig. 3 den senkrechten Schnitt III-III in Fig. 1.

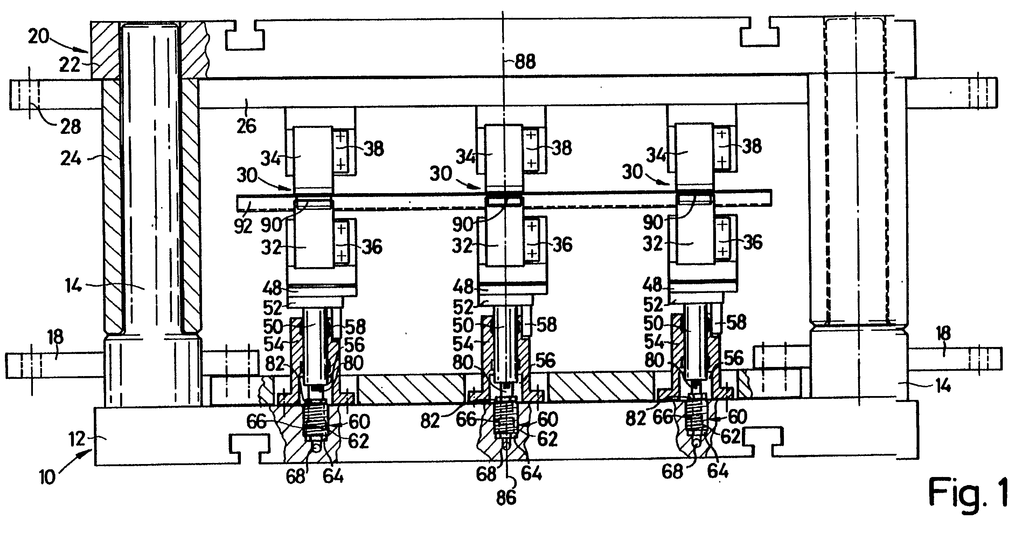

Das dargestellte Buckelschweißwerkzeug hat ein unteres Werkzeugteil 10 mit einer Grundplatte 12, die zum Festspannen auf einem Tisch einer Buckelschweißmaschine üblicher Bauart ausgebildet ist und vier senkrechte Säulen 14 trägt, von denen zwei in Fig. 1 sichtbar sind. Zwischen den Säulen 14 ist eine Kupferplatte 16 mittels nur angedeuteter Spannvorrichtungen 18 üblicher Bauart an der Grundplatte 12 befestigt.

Zum dargestellten Buckelschweißwerkzeug gehört ferner ein oberes Werkzeugteil 20 mit einer Deckplatte 22, die zum Befestigen an einem auf- und abbeweglichen Stößel oder Bär der Buckelschweißmaschine ausgebildet ist und mehrere senkrechte Buchsen 24 trägt, in denen je eine der Säulen 14 in üblicher Weise gleitend oder mittels Kugelkäfig geführt ist. Zwischen den Buchsen 24 ist eine Kupferplatte 26, ebenfalls mittels nur angedeuteter Spannvorrichtungen 28, lösbar befestigt. Das obere Werkzeugteil 2o ist in seiner tiefsten Stellung abgebildet, in der die Buchsen 24 auf je einem Absatz der zugehörigen Säule 14 ruhen.

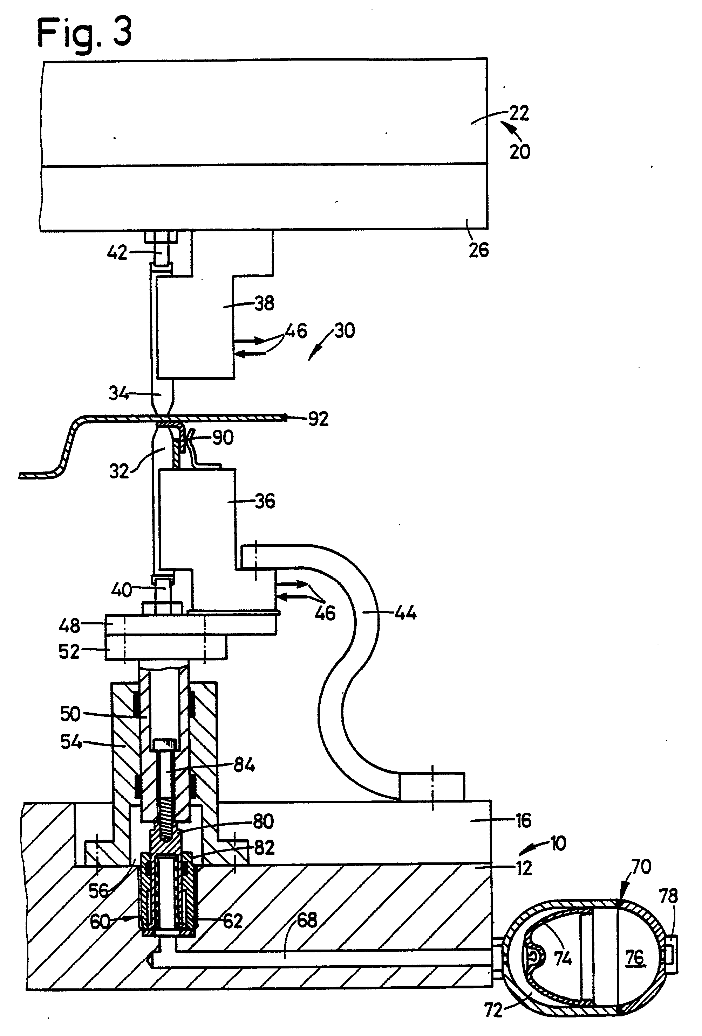

In einem Arbeitsraum zwischen den Säulen 14 und Buchsen 24 sind mehrere Elektrodenpaare 30 senkrecht angeordnet; diese bestehen je aus einer unteren Elektrode 32 und einer oberen Elektrode 34, die an einem unteren Elektrodenhalter 36 bzw. oberen Elektrodenhalter 38 festgeklemmt und mittels einer Stellschraube 40 bzw. 42 senkrecht nachstellbar sind. Die unteren Elektrodenhalter 36 sind gemäß Fig. 3 über je ein Stromband 44 an die untere Kupferplatte 16 angeschlossen, während die oberen Elektrodenhalter 38 unmittelbar an der oberen Kupferplatte 26 anliegen. Die Kupferplatten 16 und 26 sind in üblicher Weise an einen nicht dargestellten Schweißtransformator angeschlossen. An jedem der Elektrodenhalter 36 und 38 sind Anschlüsse 46 für einen Kühlmittelkreislauf vorgesehen.

Jeder der unteren Elektrodenhalter 36 ist mit einem elektrisch isoliert an ihm ausgebildeten Sockel 48 an einem Stößel 50 befestigt, der zu diesem Zweck eine Kopfplatte 52 aufweist. Die Stößel 50 sind im übrigen zylindrisch gestaltet und in je einem Führungskörper 54 senkrecht verschiebbar geführt. Die Führungskörper 54 sind glockenförmig mit je einem unteren Hohlraum 56 ausgebildet und an der Grundplatte 12 derart befestigt, daß sie, beispielsweise nach Lockern von Befestigungsschrauben, in waagerechten Richtungen begrenzt einstellbar sind. An jedem Führungskörper 54 ist außen eine Seitenführung 58 ausgebildet, die eine unbeabsichtigte Verdrehung des zugehörigen Stößels 50 verhindert.

Unter jedem Führungskörper 54 und teilweise in dessen Hohlraum 56 hineinragend ist eine hydraulische Kolbenzylindereinheit 60 angeordnet. Jede der Kolbenzylindereinheiten 60 hat einen Zylinder 62 mit Außengewinde, der in eine Gewindebohrung 64 der Grundplatte 12 eingeschraubt ist. Sämtliche Gewindebohrungen 64 und dementsprechend auch die Außengewinde sämtlicher Zylinder 62 haben den gleichen Durchmesser, sodaß die Kolbenzylindereinheiten 60 gegeneinander sowie gegen weitere, gegebenenfalls vorrätig gehaltene Kolbenzylindereinheiten ausgetauscht werden können.

Jeder der Zylinder 62 enthält einen Druckkolben 66, ist über einen in die Grundplatte 12 eingearbeiteten Kanal 68 mit einem Kraftspeicher 70 verbunden und kommuniziert mit einer in diesem enthaltenen Kammer, die ein Arbeitsmedium 72 enthält und über eine Membran 74 von einer mit Stickstoff gefüllten Kammer 76 unter Vorspannung gehalten ist. Die Vorspannung läßt sich mit handelsüblichen und daher nicht dargestellten Armaturen überwachen, die über ein Ventil 78 an die Kammer 76 anschließbar sind.

Die Kolbenzylindereinheiten 60 oder Gruppen solcher Kolbenzylindereinheiten, die an je einen Kraftspeicher 70 angeschlossen sind, haben unterschiedliche Innendurchmesser der Zylinder 62 und somit unterschiedliche wirksame Durchmesser der Druckkolben 66. Deshalb nehmen die Druckkolben 66 bei jedem Arbeitshub des Buckelschweißwerkzeugs und bei gegebenem Druck des Arbeitsmediums 72 unterschiedliche Elektrodenkräfte auf und üben dementsprechend unterschiedliche Reaktionskräfte auf die zugehörige untere Elektrode 32 aus, die über den zugehörigen Stößel 50 an dem betreffenden Druckkolben 66 abgestützt ist. Die Abstützung geschieht über je eine Kolbenstange 80, die sich durch einen Schlüsselsechskant 82 am zugehörigen Zylinder 62 hindurch nach oben erstreckt.

Durch jeden Stößel 50 erstreckt sich mit radialem Spiel eine Schraube 84, die eine Gewindebohrung der zugehörigen Kolbenstange 80 eingeschraubt ist. Das radiale Spiel jeder Schraube 84 ermöglicht es, den zugehörigen Stößel 50 und Führungskörper 54 begrenzt unabhängig von der Anordnung der zugehörigen Kolbenzylindereinheit 60 quer zur gemeinsamen Achse 86 des Stössels 50 und der zugehörigen unteren Elektrode 32 derart zu verstellen, daß die Achse 86 mit der Achse 88 der zugehörigen oberen Elektrode 34 fluchtet. Jede der oberen Elektroden 34 ist samt ihrem Elektrodenhalter 38 ebenfalls quer zur Achse 88 einstellbar, sodaß zwei Werkstücke 90 und 92 genau an mit Buckeln versehenen Stellen miteinander verschweißt werden können.

## Patentansprüche

Buckelschweisswerkzeug mit
– zwei Werkzeugteilen (10, 20), die hubweise gegeneinander bewegbar sind,
– mindestens zwei Paar Elektroden (32, 34) die einander gegenüberstehend je einem der Werkzeugteile (10, 20) zugeordnet sind,
– einer Kolbenzylindereinheit (60) je Elektrodenpaar, mit jeweils einem Druckkolben (66), der mittels eines Arbeitsmediums (72) die eine Elektrode (32) des Paares in Richtung zur gegenüberstehenden Elektrode (34) hin bewegbar am zugehörigen Werkzeugteil (10) abstützt, und
– mindestens einem Kraftspeicher (70), der durch das Arbeitsmedium (72) aufladbar ist, dadurch gekennzeichnet, dass mindestens zwei der auswechselbar am zugehörigen Werkzeugteil (10) befestigten Kolbenzylindereinheiten (60) Druckkolben (66) unterschiedlichen Durchmessers enthalten, jedoch Zylinder (62) mit Aussengewinde gleichen Durchmessers zum Einschrauben in Gewindebohrungen (64) des zugehörigen Werkzeugteils (10) aufweisen.

2. Buckelschweisswerkzeug nach Anspruch 1, dadurch gekennzeichnet, dass jeder Kolbenzylindereinheit (60) ein gesondert am zugehörigen Werkzeugteil (10) befestigter Führungskörper (54) zugeordnet ist, in dem ein Stössel (50) als Zwischenglied zwischen dem Druckkolben (66) und der zugehörigen Elektrode (32) geführt ist.

3. Buckelschweisswerkzeug nach einem der Ansprüche 1 oder 2, dadurch gekennzeichnet, dass mindestens zwei Elektrodenanordnungen, die mindestens je ein Elektrodenpaar (32, 34) aufweisen, je ein eigener Kraftspeicher (70) zugeordnet ist, der unabhängig von jedem anderen Kraftspeicher aufladbar ist.

## Claims

1. A projection welding tool having
– two tool members (10, 20) which can be moved reciprocatively in relation to one another,
– at least two pairs of electrodes (32, 34) which, situated opposite one another, are each associated with one of the tool members (10, 20),
– a piston-cylinder unit (60) for each pair of electrodes, each having a pressure piston (66) which supports the one electrode (32) of the pair on the associated tool member (10) for movement towards the opposite electrode (34) by means of a working medium (72), and

– at least one energy accumulator (70) which can be charged by the working medium (72), characterised in that at least two of the piston-cylinder units (60) interchangeably secured to the associated tool member (10) contain pressure pistons (66) of different diameters, but comprise cylinders (62) with external threads of the same diameter for screwing into tapped holes (64) in the associated tool member (10).

2. A projection welding tool according to Claim 1, characterised in that associated with each piston-cylinder unit (60) is a guide member (54) which is secured separately to the associated tool member (10) and in which a ram (50) is guided as an intermediate member between the pressure piston (66) and the associated electrode (32).

3. A projection welding tool according to either of Claims 1 or 2, characterised in that associated with each of at least two electrode arrangements, each of which comprises at least one pair of electrodes (32, 34), is its own energy accumulator (70) which can be charged independently of every other energy accumulator.

**Revendications**

1. Outil de soudage par bossages comportant
– deux parties d'outil (10, 20) qui se déplacent l'une vers l'autre sur une certaine course,
– au moins deux paires d'électrodes (32, 34) qui, opposées l'une à l'autre, sont associées chacune à l'une des parties d'outil (10, 20),
– une unité à cylindre et piston (60) par paire d'électrodes, comportant chacune un piston de pression (66) qui, à l'aide d'un fluide de travail (72) fait qu'une électrode (32) de la paire, en se déplaçant vers l'électrode opposée (34), prend appui contre la partie d'outil correspondante (10), et
– au moins un accumulateur d'énergie (70) qui est chargeable par le fluide de travail (72), caractérisé en ce qu'au moins deux des unités à cylindre et piston (60) fixées de manière interchangeable sur la partie d'outil correspondante (10), comprennent des pistons de pression (66) de diamètre différent, mais présentent des cylindres (62) dont le filetage est de même diamètre, pour permettre de visser la partie d'outil correspondante (10) dans des trous taraudés (64).

2. Outil de soudage par bossages selon la revendication 1, caractérisé en ce qu'on associe à chaque unité un cylindre et piston (60) un corps de guidage (54) fixé séparément sur la partie d'outil correspondante (10), dans lequel un coulisseau (50) servant d'organe intermédiaire, est guidé entre le piston de pression (66) et l'élctrode correspondante (32).

3. Outil de soudage par bossages selon la revendication 1 ou 2, caractérisé en ce qu'on associe à au moins deux agencements d'électrodes qui comportent chacun au moins une paire d'électrodes (32, 34), un accumulateur d'énergie (70) particulier qui est "chargeable" indépendamment de tout autre accumulateur d'énergie.

Fig.1

Fig. 2

EP 0 259 591 B1

# Fig. 3